# EUROPÄISCHE PATENTSCHRIFT

(11) **EP 2 057 385 B1**
(45) Veröffentlichungstag und Bekanntmachung des Hinweises auf die Patenterteilung: **21.10.2009**
(21) Anmeldenummer: 07787304.0
(22) Anmeldetag: 10.07.2007
(51) Int. Cl.: F16D 65/18

(54) **SELBSTVERSTÄRKENDE ELEKTROMECHANISCHE REIBUNGSBREMSE**
SELF-BOOSTING ELECTROMECHANICAL FRICTION BRAKE
FREIN A FRICTION ELECTROMECANIQUE A AUTO-AMPLIFICATION

(30) Priorität: 25.08.2006 DE 102006039984
(43) Veröffentlichungstag der Anmeldung: 13.05.2009
(73) Patentinhaber: Robert Bosch GmbH, 70442 Stuttgart (DE)
(72) Erfinder: CAO, Chi-Thuan, 70825 Korntal-Muenchingen (DE); HOFMANN, Dirk, 70439 Stuttgart (DE); VOLLERT, Herbert, 71665 Vaihingen/Enz (DE); NAGEL, Willi, 71686 Remseck/Hochdorf (DE); FOITZIK, Bertram, 74360 Ilsfeld (DE); GOETZELMANN, Bernd, 71063 Sindelfingen (DE)
(86) Internationale Anmeldenummer: PCT/EP2007/057029
(87) Internationale Veröffentlichungsnummer: WO 2008/022844

(56) Entgegenhaltungen:
- WO-A-20/05064195
- DE-A1- 10 324 424
- US-A- 6 119 822

## Beschreibung

### Stand der Technik

Die Erfindung betrifft eine selbstverstärkende elektromechanische Reibungsbremse mit den Merkmalen des Oberbegriffs des Anspruchs 1.

Eine derartige Reibungsbremse ist bekannt aus der Offenlegungsschrift DE 103 49 078 A1. Die bekannte Reibungsbremse ist eine Scheibenbremse, ihr zu bremsender Bremskörper eine Bremsscheibe. Die Erfindung ist insbesondere auf eine Scheibenbremse gerichtet, sie ist allerdings auch für andere Bremsenbauformen anwendbar. Die bekannte Reibungsbremse weist einen Reibbremsbelag auf, der zur Erzielung einer Selbstverstärkung in einem Winkel zu einer Reibfläche des Bremskörpers, bei einer Scheibenbremse also in einem Winkel zur Bremsscheibe, verschiebbar geführt ist. Die Reibfläche bezeichnet die Fläche des Bremskörpers, die bei betätigter Bremse und drehendem Bremskörper in Berührung mit dem Reibbremsbelag kommt. Der drehende Bremskörper übt eine Reibungskraft auf den beim Bremsen gegen ihn gedrückten Reibbremsbelag in Umfangsrichtung des Bremskörpers aus. Die Führung des Reibbremsbelags in einem Winkel zur Reibfläche des Bremskörpers bewirkt eine Reaktionskraft senkrecht zur Verschieberichtung. Diese Reaktionskraft weist eine Kraftkomponente senkrecht zur Reibfläche des Bremskörpers auf. Diese Kraftkomponente ist eine Andruckkraft, die den Reibbremsbelag zusätzlich zu einer von einer Betätigungseinrichtung aufgebrachten Andruckkraft gegen den Bremskörper drückt und dadurch die Bremskraft der Reibungsbremse erhöht. Die vom drehenden Bremskörper auf den bei betätigter Reibungsbremse gegen ihn gedrückten Reibbremsbelag ausgeübte Reibungskraft wird durch die Führung des Reibbremsbelags in einem Winkel zur Reibfläche des Bremskörpers in die erläuterte Andruckkraft zusätzlich zu der von der Betätigungseinrichtung aufgebrachten Andruckkraft gewandelt, die die Bremskraft der Reibungsbremse erhöht, d. h. eine Selbstverstärkung der Reibungsbremse bewirkt.

Bei der bekannten Reibungsbremse erfolgt die Führung des Reibbremsbelags mit Rampen, die eine Steigung in Bezug auf die Reibfläche des Bremskörpers in dessen Umfangsrichtung aufweisen. Die Steigung der Rampen kann sich über einen Verschiebeweg des Reibbremsbelags ändern, um beispielsweise zu Beginn der Betätigung der Reibungsbremse einen großen Zustellweg und eine große Zustellgeschwindigkeit und am Ende des Verschiebewegs, d. h. bei hoher Andruck- und Bremskraft eine große Selbstverstärkung zu erzielen. Weisen die Rampen eine über den Verschiebeweg des Reibbremsbelags konstante Steigung auf, spricht man auch von Keilen und einem Keilmechanismus.

Die Führung des Reibbremsbelags in Umfangsrichtung zum Bremskörper und zugleich in einem Winkel zur Reibfläche, d. h. mit einer Steigung zum Bremskörper, bedeutet eine Verschiebbarkeit des Reibbremsbelags auf einer schraubenlinienförmigen Bahn koaxial zu einer Drehachse des Bremskörpers. Zur Erzielung der Selbstverstärkungswirkung kann der Reibbremsbelag beispielsweise auch in einer Sehnenrichtung zur Bremsscheibe, also auf einer geraden Bahn in einem Winkel zur Reibfläche des Bremskörpers verschiebbar geführt sein. Wesentlich zum Wandeln der vom drehenden Bremskörper auf den zum Bremsen gegen ihn gedrückten Reibbremsbelag in eine Andruckkraft ist, dass die Verschieberichtung des Reibbremsbelags eine Komponente in Umfangsrichtung des Bremskörpers aufweist.

Die bekannte Reibungsbremse weist eine elektromechanische Betätigungseinrichtung zum Verschieben des Reibbremsbelags zur Betätigung der Reibungsbremse auf. Die elektromechanische Betätigungseinrichtung weist einen Elektromotor, ein nicht zwingend erforderliches Zahnrad-Untersetzungsgetriebe und ein Zahnstangengetriebe zum Wandeln der drehenden Antriebsbewegung des Elektromotors in eine translatorische Bewegung zum Verschieben des Reibbremsbelags auf. Eine Zahnstange des Zahnstangengetriebes ist starr auf einer dem Bremskörper abgewandten Rückseite des Reibbremsbelags angeordnet. Die Zahnstange verläuft entsprechend der Verschieberichtung des Reibbremsbelags auf einer schraubenlinienförmigen Bahn um die Drehachse des Bremskörpers, die Zahnstange weist dieselbe Steigung (nicht unbedingt denselben Winkel) wie die Verschieberichtung des Reibbremsbelags auf. Zum Bremsen wird der Reibbremsbelag mit der elektromechanischen Betätigungseinrichtung in seiner Verschieberichtung im Winkel auf die Reibfläche des Bremskörpers zu bewegt, so dass er in Anlage an die Reibfläche des Bremskörpers gelangt und gegen den Bremskörper gedrückt wird und den Bremskörper bremst.

### Offenbarung der Erfindung

Die erfindungsgemäße Reibungsbremse mit den Merkmalen des Anspruchs 1 weist ein Zahnstangengetriebe auf, dessen Zahnstange gelenkig mit dem Reibbremsbelag verbunden ist. Die Zahnstange kann dadurch eine gewöhnliche gerade Zahnstange sein. Zur Führung der Zahnstange im Bereich eines Zahnrads des Zahnstangengetriebes und um die Zahnstange mit dem Zahnrad in Eingriff zu halten, weist das Zahnstangengetriebe der erfindungsgemäßen Reibungsbremse ein Widerlager auf, das mit radialem Abstand vom Zahnrad des Zahnstangengetriebes angeordnet ist. Die Zahnstange ist in einem Zwischenraum zwischen dem Widerlager und dem Zahnrad angeordnet. Das Widerlager kann ein Gleitlager sein, auf dem die Zahnstange gleitet. Insbesondere weist das Widerlager einen Wälzkörper, beispielsweise eine drehbar gelagerte Rolle auf, auf der die Zahnstange wälzt. Das Widerlager ist ortsfest in Bezug auf das Zahnrad. Die Verzahnung des Zahnstangengetriebes der erfindungsgemäßen Reibungsbremse weist ein Spiel auf, so dass die Zahnstange um eine gedachte Drehachse des Zahnrads und/oder um eine gedachte Achse radial zur Drehachse des Zahnrads senkrecht zur Zahnstange und durch eine Längsmitte der Zahnstange schwenkbar ist. Letztere Achse kann auch als Hochachse der Zahnstange bezeichnet werden. Schwenkbar zur Drehachse des Zahnrads ist gleichbedeutend mit schwenkbar um eine zur Drehachse des Zahnrads parallele Achse.

Die Erfindung ermöglicht in einfacher Weise eine Anpassung der Zahnstange an die schraubenlinienförmige Bewegung des Reibbremsbelags. Die notwendigen Schwenkbewegungen der Zahnstange sind gering, so dass der Ausgleich durch Spiel in der Verzahnung des Zahnstangengetriebes möglich ist. Außerdem gleicht die Erfindung Fluchtungs- und Winkelfehler zwischen der Zahnstange und der Verschieberichtung des Reibbremsbelags aus. Weiterer Vorteil der Erfindung ist deren kompakte und vergleichsweise einfache Konstruktion. Die Erfindung benötigt nur eine gelenkige Verbindung, wobei ein robustes einachsiges Gelenk genügt und kein Kugelgelenk erforderlich ist. Des Weiteren kommt die Erfindung mit einer gewöhnlichen, geraden Zahnstange aus. Die Führung der Zahnstange mit dem Widerlager ist ebenfalls konstruktiv einfach.

Die Unteransprüche haben vorteilhafte Ausgestaltungen und Weiterbildungen der im Anspruch 1 angegebenen Erfindung zum Gegenstand.

### Kurze Beschreibung der Zeichnungen

Die Erfindung wird nachfolgend anhand eines in der Zeichnung dargestellten Ausführungsbeispiels näher erläutert. Es zeigen:
- Figur 1: eine Reibungsbremse gemäß der Erfindung in Ansicht mit Blickrichtung radial von außen auf eine Bremsscheibe;
- Figur 2: einen Schnitt gemäß Linie II-II in Figur 1; und
- Figur 3: eine Ansicht eines Zahnstangengetriebes gemäß Pfeil III in Figur 1.

Die Zeichnung ist als schematisierte und teilweise vereinfachte Darstellung zum Verständnis und zur Erläuterung der Erfindung zu verstehen.

### Ausführungsform der Erfindung

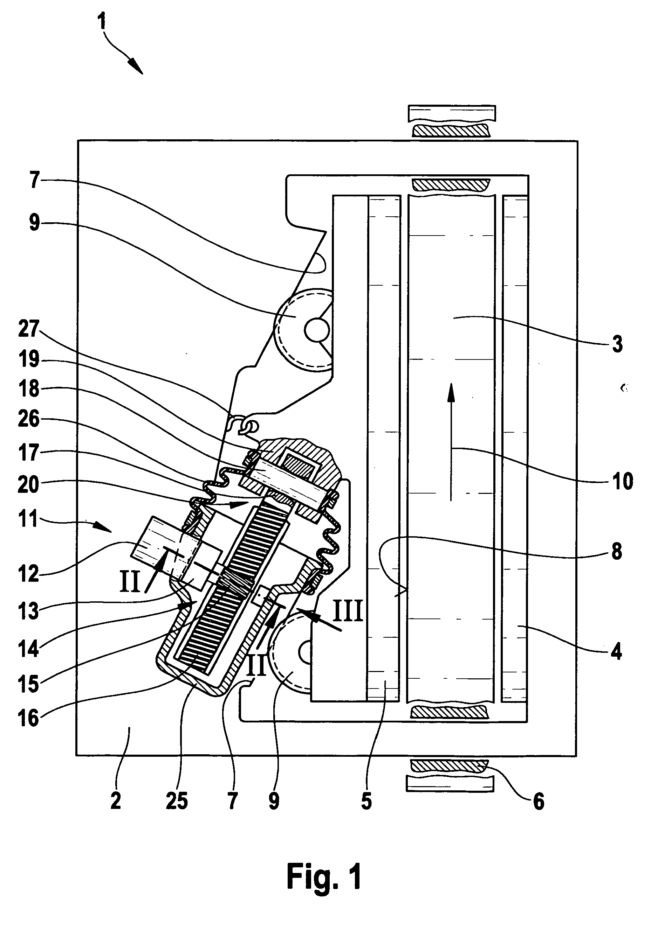

Die in Figur 1 dargestellte erfindungsgemäße Reibungsbremse ist als Scheibenbremse 1 mit einem Bremssattel 2 ausgebildet, in dem beiderseits einer Bremsscheibe 3 Reibbremsbeläge 4, 5 angeordnet sind. Der in Figur 1 rechts dargestellte Reibbremsbelag 4 ist unbeweglich im Bremssattel 2 angeordnet, er wird deswegen nachfolgend als fester Reibbremsbelag 4 bezeichnet werden. Der in Figur 1 links von der Bremsscheibe 3 dargestellte Reibbremsbelag 5 ist zur Betätigung der Scheibenbremse 1 gegen die Bremsscheibe 3 drückbar, d. h. er ist im Bremssattel 2 beweglich. Der Bremssattel 2 ist als sog. Schwimmsattel ausgebildet, d. h. er ist in angedeuteten Führungen 6 quer zur Bremsscheibe 3 verschiebbar. Durch Drücken des beweglichen Reibbremsbelags 5 gegen die eine Seite der Bremsscheibe 3 wird der Bremssattel 2 in an sich bekannter Weise quer zur Bremsscheibe 3 verschoben und drückt den festen Reibbremsbelag 4 gegen die andere Seite der Bremsscheibe 3, die dadurch gebremst wird.

Der Bremssattel 2 weist Rampen 7 auf, die in Umfangsrichtung zur Bremsscheibe 3 und in einem Winkel, d. h. mit einer Steigung zu einer Reibfläche 8 der Bremsscheibe 3 verlaufen. Die Reibfläche 8 ist die dem beweglichen Reibbremsbelag 5 zugewandte, lochscheibenförmige Fläche der Bremsscheibe 3, an der der Reibbremsbelag 5 bei betätigter Scheibenbremse 1 und drehender Bremsscheibe 3 anliegt. Auf der gegenüberliegenden Seite weist die Bremsscheibe 3 ebenfalls eine solche Reibfläche auf, die dem festen Reibbremsbelag 4 zugewandt ist. Die Rampen 7 verlaufen auf einer gedachten schraubenlinienförmigen Bahn um eine gedachte Drehachse der Bremsscheibe 3. Der bewegliche Reibbremsbelag 5 stützt sich mit Rollen 9 an den Rampen 7 ab und ist über die Rollen 9 an den Rampen 7 auf einer gedachten schraubenlinienförmigen Bahn um die Drehachse der Bremsscheibe 3 verschiebbar geführt. Die Rollen 9 sind drehbar auf einer der Bremsscheibe 3 abgewandten Rückseite des beweglichen Reibbremsbelags 5 gelagert. Ein maximaler Verschiebeweg des Reibbremsbelags 5 ist kurz in Bezug auf einen vollen Umlauf, der Reibbremsbelag 5 wird nur um einen Bruchteil eines vollen Umlaufs verschoben. Bei der dargestellten Ausführungsform der Erfindung ist die Steigung der Rampen 7 konstant, man spricht auch von Keilen bzw. einem Keilmechanismus. Abweichend von der Darstellung können die Rampen 7 auch einen sich über ihre Länge ändernden Rampenwinkel aufweisen, insbesondere kann sich die Steigung mit zunehmender Verschiebung des Reibbremsbelags 5 verkleinern, d. h. ein Winkel zwischen den Rampen 7 und der Reibfläche 8 der Bremsscheibe 3 wird zunehmend spitzer. Dadurch wird zu Beginn der Verschiebung eine schnelle Zustellung des Reibbremsbelags 5 zur Bremsscheibe 3 und am Ende der Verschiebung, d. h. bei großer Andruck- und Bremskraft eine hohe, noch zu erläuternde Selbstverstärkung der Scheibenbremse 1 erzielt.

Zur Betätigung der Scheibenbremse 1 wird der bewegliche Reibbremsbelag 5 auf seiner schraubenlinienförmigen Bahn entlang der Rampen 7 verschoben. Er bewegt sich dabei in Umfangsrichtung der Bremsscheibe 3 und zugleich auf die Bremsscheibe 3 zu, bis er an ihrer Reibfläche 8 anliegt, gegen die Bremsscheibe 3 gedrückt wird und die Bremsscheibe 3 bremst. Wie bereits beschrieben, wird dabei der Bremssattel 2 quer zur Bremsscheibe 3 verschoben und drückt den festen Reibbremsbelag 4 gegen die andere Seite der Bremsscheibe 3. Die drehende Bremsscheibe 3 übt eine Reibungskraft in Umfangsrichtung der Bremsscheibe 3 auf den zum Bremsen gegen sie gedrückten beweglichen Reibbremsbelag 5 aus. In der mit Pfeil 10 angenommenen Drehrichtung der Bremsscheibe 3 beaufschlagt die von der Bremsscheibe 3 ausgeübte Reibungskraft den Reibbremsbelag 5 in Richtung eines enger werdenden Spalts zwischen den Rampen 7 und der Bremsscheibe 3. Aufgrund des in einem Winkel zur Reibfläche 8 der Bremsscheibe 3 schrägen Verlaufs der Rampen 7 bewirkt die Abstützung des beweglichen Reibbremsbelags 5 an den Rampen 7 eine Abstützkraft senkrecht zu den Rampen 7. Die Abstützkraft weist eine Komponente senkrecht zur Reibfläche 8 der Bremsscheibe 3 auf, die den Reibbremsbelag 5 zusätzlich zu einer von einer noch zu beschreibenden Betätigungseinrichtung ausgeübten Andruckkraft gegen die Bremsscheibe 3 drückt. Die Bremskraft wird dadurch verstärkt. Die Rampen 7 bilden einen Rampenmechanismus oder sind Teil eines Rampenmechanismus bzw. einer Selbstverstärkungseinrichtung, der/die die von der drehenden Bremsscheibe 3 auf den beim Bremsen gegen sie gedrückten beweglichen Reibbremsbelag 5 ausgeübte Reibungskraft in eine Andruckkraft wandelt, die den Reibbremsbelag 5 zusätzlich zu der von der Betätigungseinrichtung aufgebrachten Andruckkraft gegen die Bremsscheibe 3 drückt und damit die Bremskraft der Scheibenbremse 1 erhöht. Die Scheibenbremse 1 weist eine Selbstverstärkung auf.

Die Scheibenbremse 1 ist elektromechanisch, d. h. sie weist eine elektromechanische Betätigungseinrichtung 11 auf. Die Betätigungseinrichtung 11 umfasst einen Elektromotor 12 mit angeflanschtem Untersetzungsgetriebe 13 und einem Zahnstangengetriebe 14 mit einem Zahnrad 15 und einer geraden Zahnstange 16. Ein Ende der Zahnstange 16 weist ein Auge 17 auf, das einen Gelenkbolzen 18 umgreift, der in einen gegabelten Gelenkbock 19 auf der Rückseite des beweglichen Reibbremsbelags 5 eingesetzt ist. Das Auge 17 und der Gelenkbolzen 18 bilden ein Gelenk, das die Zahnstange 16 gelenkig mit dem beweglichen Reibbremsbelag 5 verbindet. Eine Innenfläche des Auges 17 ist ballig, um eine Schwenkbarkeit der Zahnstange 16 zum Bolzen 18 zu ermöglichen. Zusätzlich weist das Auge 17 Spiel in seitlicher Richtung, d. h. in axialer Richtung des Gelenkbolzens 18 im Gelenkbock 19 auf. Mit der elektromechanischen Betätigungseinrichtung 11 wird der Reibbremsbelag 5 zur Betätigung der Scheibenbremse 1 in oben beschriebener Weise auf der schraubenlinienförmigen Bahn zur Bremsscheibe 3 verschoben. Das Auge 17 der Zahnstange 16 und der Gelenkbock 19 des beweglichen Reibbremsbelags 5 mit dem Bolzen 18 bilden ein Gelenk 20, das die Zahnstange 16 gelenkig mit dem beweglichen Reibbremsbelag 5 verbindet.

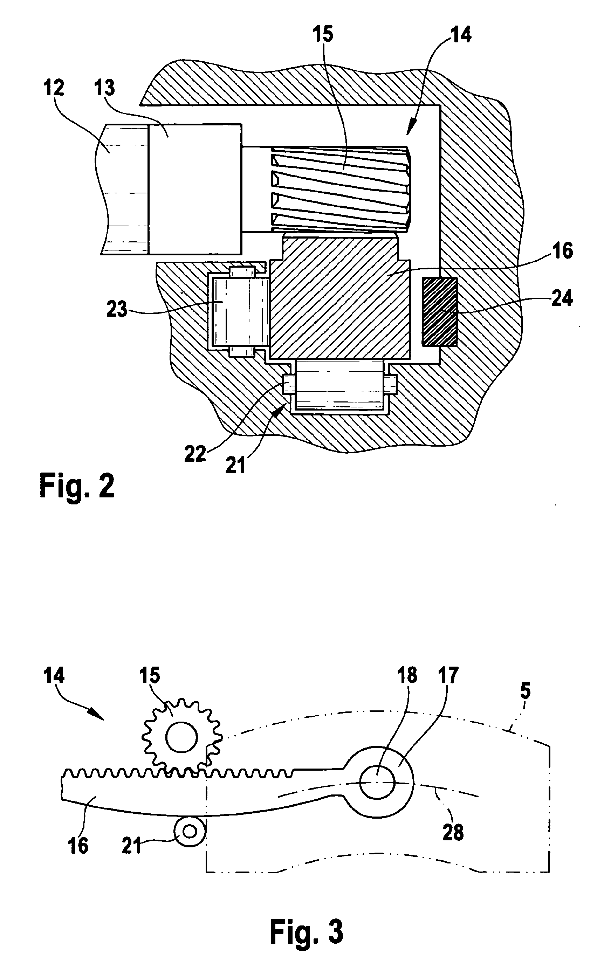

Mit radialem Abstand vom Zahnrad 15 weist das Zahnstangengetriebe 14 ein Widerlager 21 auf, zwischen dem und dem Zahnrad 15 die Zahnstange 16 angeordnet ist. Das Widerlager 21 hält die Zahnstange 16 in Eingriff mit dem Zahnrad 15. Das Widerlager 21 ist ortsfest in Bezug auf das Zahnrad 15. Das Widerlager 21 kann ein Gleitlager sein, bei der dargestellten Ausführungsform der Erfindung ist das Widerlager 21 ein Wälzlager, es weist eine drehbar gelagerte Rolle 22 auf (Figur 2).

Da sich der Reibbremsbelag 5 auf einer schraubenlinienförmigen Bahn bewegt, bewegt sich auch das Gelenk 20, das das Ende der Zahnstange 16 mit dem Reibbremsbelag 5 verbindet, auf einer schraubenlinienförmigen Bahn. Folglich verschiebt sich die Zahnstange 16 nicht geradlinig, sondern sie schwenkt auch um eine gedachte Drehachse des Zahnrads 15 bzw. eine gedachte, dazu parallele Achse durch die Zahnstange 16. Diese Schwenkbewegung der Zahnstange 16 wird durch Spiel in einer Verzahnung des Zahnstangengetriebes 14 ausgeglichen. Da ein Schwenkwinkel der Zahnstange 16 klein ist, ist der Ausgleich durch das Spiel der Verzahnung des Zahnstangengetriebes 14 möglich. In Figur 3 ist die mit dem Zahnrad 15 kämmende Zahnstange 16 in Seitenansicht dargestellt. Ihr Auge 17 bewegt sich wie bereits mehrfach gesagt auf einer schraubenlinienförmigen Bahn, die in der Seitenansicht als Kreisbogen erscheint und mit der Strichpunktlinie 28 dargestellt ist. Mit Strich-Zweipunkt-Linie ist in Figur 3 der bewegliche Reibbremsbelag 5 angedeutet, der sich vor der Zeichenebene befindet. Die Zahnstange 16 greift in Seitenansicht gesehen in Höhe eines Flächenschwerpunkts des Reibbremsbelags 5 am Reibbremsbelag 5 an, an einer Stelle des Verschiebewegs des Reibbremsbelags 5 ist die Zahnstange 16 tangential zum Verschiebeweg ausgerichtet. In Verschieberichtung davor und dahinter schwenkt die Zahnstange 16 durch die Bewegung ihres Auges 17 auf der schraubenlinienförmigen Bahn 28 um einen kleinen Winkel um die Drehachse des Zahnrads 15. Diese Schwenkbewegung der Zahnstange 16 wird durch das Spiel der Verzahnung des Zahnstangengetriebes 14 ausgeglichen.

Wie in Figur 3 zu sehen, ist eine dem Zahnrad 15 abgewandte Unterseite der Zahnstange 16 konvex, d. h. eine Dicke der Zahnstange 16 ändert sich über deren Länge. Die Konvexität der Zahnstange 16 ist stark übertrieben dargestellt, um sie sichtbar zu machen. Durch die sich ändernde Dicke der Zahnstange 16 ändert sich auch das Spiel der Verzahnung und damit der mögliche Schwenkwinkel der Zahnstange 16. Durch die Konvexität der Unterseite ist die Zahnstange 16 in ihrer Längsmitte am dicksten, das Spiel der Verzahnung ist am geringsten. Steht die Zahnstange 16 mit ihrer Längsmitte in Eingriff mit dem Zahnrad 15, verläuft sie tangential zum Zahnrad 15. Wird die Zahnstange 16 durch Drehen des Zahnrads 15 verschoben, schwenkt sie wie beschrieben um eine zur Drehachse des Zahnrads 15 parallele, gedachte Achse. Bei der Verschiebung der Zahnstange 16 vergrößert sich das Spiel der Verzahnung durch die sich zu den Enden der Zahnstange 16 verringernde Dicke der Zahnstange 16, wodurch die Schwenkbewegung ermöglicht wird. Die Unterseite der Zahnstange 16 muss nicht zwingend konvex sein, die Dicke der Zahnstange 16 über ihre Länge und damit das Spiel der Verzahnung ist abhängig von der Geometrie. Die Unterseite der Zahnstange 16 ist so zu formen, dass das für die schraubenförmige Bewegung ihres Auges 17 erforderliche Spiel vorhanden ist. Diese Überlegung gilt für die Fläche der Zahnstange 16, die vom Widerlager 21 abgestützt wird. Das muss nicht zwingend die Unterseite der Zahnstange 16 sein.

Im Bereich des Zahnrads 15, eventuell auch mit Versatz in Längsrichtung der Zahnstange 16, ist die Zahnstange 16 mit seitlich angeordneten Längsführungen 23, 24 geführt. Die eine Längsführung 23 weist eine Wälzlagerung auf, die andere Längsführung 24 ist eine Gleitlagerung. Die Zahnstange 16 und das Zahnrad 15 weisen eine Schrägverzahnung auf, die die Zahnstange 16 beim Betätigen der Scheibenbremse 1 gegen die die Wälzlagerung aufweisende Längsführung 23 beaufschlagt. Auch zwischen den Längsführungen 23, 24 weist die Zahnstange 16 ein Spiel auf, um eine Schwenkbewegung um eine gedachte Achse radial durch die Drehachse des Zahnrads 15 in einer Mittellängsebene der Zahnstange 16 zu ermöglichen. Dadurch ist ein Ausgleich der schraubenlinienförmigen Bewegung des Auges 17 der Zahnstange 16 beim Verschieben des beweglichen Reibbremsbelags 5 möglich. Da die Verschiebung auf der schraubenlinienförmigen Bahn nicht in einer Ebene, sondern wie gesagt auf einer Schraubenlinie erfolgt, bewegt sich das Gelenk 20, das die Zahnstange 16 und den Reibbremsbelag 5 verbindet, auch seitlich zur Zahnstange 16. Ein weiterer Ausgleich in der Seitenrichtung ist durch das seitliche Spiel des Auges 17 der Zahnstange 16 im Gelenkbock 19 gewährleistet.

Zur Verbesserung der Schwenkbarkeit der Zahnstange 16 in der Seitenrichtung ist die Verzahnung des Zahnrads 15 und/oder der Zahnstange 16 ballig, d. h. Zahnflanken sind von einer zur anderen Seite der Zahnstange 16 bzw. des Zahnrads 15 konvex gewölbt. Das gilt jedenfalls für die Zahnflanken, die beim Betätigen der Scheibenbremse 1 tragen. Es genügt, wenn die Verzahnung entweder der Zahnstange 16 oder des Zahnrads 15 ballig ist.

Ein Freiraum zwischen einem Gehäuse 25 der Betätigungseinrichtung 11 und dem Gelenkbock 19 bzw. der Rückseite des Reibbremsbelags 5 ist mit einem Faltenbalg 26 geschlossen. Das Zahnstangengetriebe 14 ist dadurch hermetisch umschlossen und vor Schmutz und Nässe geschützt.

Eine Rückstellfeder 27 beaufschlagt den beweglichen Reibbremsbelag 5 gegen die Rampen 7 und in Richtung seiner Ausgangsstellung bei unbetätigter Scheibenbremse 1. Die Rückstellfeder 27 bewirkt auch beim Lösen der Scheibenbremse 1 eine Anlage der vorderen Flanken der Zähne der Verzahnungen des Zahnradgetriebes 14 und des Untersetzungsgetriebes 13, es tragen beim Lösen der Scheibenbremse 1 dieselben Zahnflanken wie beim Betätigen.

## Patentansprüche

1. Selbstverstärkende elektromechanische Reibungsbremse, mit einem Reibbremsbelag (5), der in Umfangsrichtung zu einem Bremskörper (3) und in einem Winkel zu einer Reibfläche (8) des Bremskörpers (3) verschiebbar geführt ist, mit einer elektromechanischen Betätigungseinrichtung (11), mit der der Reibbremsbelag (5) verschiebbar ist, wobei die Betätigungseinrichtung (11) ein Zahnstangengetriebe (14) mit einem drehend antreibbaren Zahnrad (15) und mit einer vom Zahnrad (15) angetriebenen Zahnstange (16), die mit dem Reibbremsbelag (5) verbunden ist, aufweist, **dadurch gekennzeichnet, dass** das Zahnstangengetriebe (11) ein Widerlager (21) für die Zahnstange (16) aufweist, das mit radialem Abstand vom Zahnrad (15) des Zahnstangengetriebes (14) angeordnet ist, wobei sich die Zahnstange (16) in einem Zwischenraum zwischen dem Zahnrad (15) und dem Widerlager (21) befindet und vom Widerlager (21) in Eingriff mit dem Zahnrad (15) gehalten wird, dass eine Verzahnung des Zahnstangengetriebes (14) Spiel aufweist, so dass die Zahnstange (16) um eine gedachte Drehachse des Zahnrads (15) und/oder um eine gedachte Achse radial zur Drehachse des Zahnrads (15) schwenkbar ist, und dass die Zahnstange (16) gelenkig mit dem Reibbremsbelag (5) verbunden ist.

2. Reibungsbremse nach Anspruch 1, **dadurch gekennzeichnet, dass** das Zahnstangengetriebe (14) eine ballige Verzahnung aufweist.

3. Reibungsbremse nach Anspruch 1, **dadurch gekennzeichnet, dass** das Zahnstangengetriebe (14) eine seitliche Führung (23, 24) für die Zahnstange (16) im Bereich des Zahnrads (15) aufweist, die die Zahnstange (16) in seitlicher Richtung zum Zahnrad (15) führt.

4. Reibungsbremse nach Anspruch 1, **dadurch gekennzeichnet, dass** das Zahnstangengetriebe (14) eine Schrägverzahnung aufweist.

5. Reibungsbremse nach Anspruch 1, **dadurch gekennzeichnet, dass** sich eine Dicke der Zahnstange (16) und damit ein Spiel einer Verzahnung des Zahnstangengetriebes (14) über eine Länge der Zahnstange (16) ändert.

6. Reibungsbremse nach Anspruch 1, **dadurch gekennzeichnet, dass** der Reibbremsbelag (5) auf einer schraubenlinienförmigen, zum Bremskörper (3) koaxialen Bahn verschiebbar geführt ist.

7. Reibungsbremse nach Anspruch 1, **dadurch gekennzeichnet, dass** die gelenkige Verbindung der Zahnstange (16) mit dem Reibbremsbelag (5) ein Auge (17) mit balliger Innenseite aufweist.

8. Reibungsbremse nach Anspruch 1, **dadurch gekennzeichnet, dass** die gelenkige Verbindung der Zahnstange (16) mit dem Reibbremsbelag (5) Spiel quer zur Zahnstange (16) aufweist.

9. Reibungsbremse nach Anspruch 1, **dadurch gekennzeichnet, dass** die Zahnstange (16) in der Verschieberichtung des Reibbremsbelags (5) und/oder in Höhe eines Reibflächenschwerpunkts des Reibbremsbelags (5) angeordnet ist.

## Claims

1. Self-boosting electromechanical friction brake, having a friction brake lining (5) which is guided so as to be movable in the circumferential direction with respect to a brake body (3) and at an angle with respect to a friction surface (8) of the brake body (3), having an electromechanical actuating device (11) by means of which the friction brake lining (5) can be moved, with the actuating device (11) having a rack and pinion gear (14) with a pinion (15) which can be driven in rotation and with a rack (16) which is driven by the pinion (15) and which is connected to the friction brake lining (5), **characterized in that** the rack and pinion gear (14) has an abutment (21) for the rack (16), which abutment (21) is arranged at a radial distance from the pinion (15) of the rack and pinion gear (14), with the rack (16) being situated in an intermediate space between the pinion (15) and the abutment (21) and being held in engagement with the pinion (15) by the abutment (21), **in that** a toothing of the rack and pinion gear (14) has play such that the rack (16) is pivotable about an imaginary rotational axis of the pinion (15) and/or about an imaginary axis radially with respect to the rotational axis of the pinion (15), and **in that** the rack (16) is articulatedly connected to the friction brake lining (5).

2. Friction brake according to Claim 1, **characterized in that** the rack and pinion gear (14) has a crowned toothing.

3. Friction brake according to Claim 1, **characterized in that** the rack and pinion gear (14) has a lateral guide (23, 24) for the rack (16) in the region of the pinion (15), which lateral guide (23, 24) guides the rack (16) in the lateral direction with respect to the pinion (15).

4. Friction brake according to Claim 1, **characterized in that** the rack and pinion gear (14) has a helical toothing.

5. Friction brake according to Claim 1, **characterized in that** a thickness of the rack (16) and therefore a play of the toothing of the rack and pinion gear (14) varies over a length of the rack (16).

6. Friction brake according to Claim 1, **characterized in that** the friction brake lining (5) is guided so as to be moveable on a helical path which is coaxial with respect to the brake body (3).

7. Friction brake according to Claim 1, **characterized in that** the articulated connection of the rack (16) to the friction brake lining (5) has a lug (17) with a spherical inner side.

8. Friction brake according to Claim 1, **characterized in that** the articulated connection of the rack (16) to the friction brake lining (5) has play transversely with respect to the rack (16).

9. Friction brake according to Claim 1, **characterized in that** the rack (16) is arranged in the movement direction of the friction brake lining (5) and/or at the level of a friction surface centre of gravity of the friction brake lining (5).

## Revendications

1. Frein à friction électromécanique à auto-amplification, comprenant une garniture de frein à friction (5), qui est guidée de manière déplaçable dans la direction périphérique vers un corps de frein (3) et suivant un certain angle par rapport à une surface de friction (8) du corps de frein (3), avec un dispositif d'actionnement électromécanique (11), avec lequel la garniture de frein à friction (5) peut être déplacée, le dispositif d'actionnement (11) présentant un mécanisme à crémaillère (14) avec un pignon (15) pouvant être entraîné en rotation et avec une crémaillère (16) entraînée par le pignon (15), qui est connectée à la garniture de frein à friction (5), **caractérisé en ce que** le mécanisme à crémaillère (14) présente une butée (21) pour la crémaillère (16), qui est disposée à distance radiale du pignon (15) du mécanisme à crémaillère (14), la crémaillère (16) se trouvant dans un espace intermédiaire entre le pignon (15) et la butée (21) et étant maintenue en prise avec le pignon (15) par la butée (21), **en ce qu'**une denture du mécanisme à crémaillère (14) présente un certain jeu, de sorte que la crémaillère (16) puisse pivoter autour d'un axe de rotation imaginaire du pignon (15) et/ou autour d'un axe imaginaire radialement par rapport à l'axe de rotation du pignon (15), et **en ce que** la crémaillère (16) est connectée de manière articulée à la garniture de frein à friction (5).

2. Frein à friction selon la revendication 1, **caractérisé en ce que** le mécanisme à crémaillère (14) présente une denture convexe.

3. Frein à friction selon la revendication 1, **caractérisé en ce que** le mécanisme à crémaillère (14) présente un guide latéral (23, 24) pour la crémaillère (16) dans la région du pignon (15), qui guide la crémaillère (16) dans la direction latérale par rapport au pignon (15).

4. Frein à friction selon la revendication 1, **caractérisé en ce que** le mécanisme à crémaillère (14) présente une denture oblique.

5. Frein à friction selon la revendication 1, **caractérisé en ce qu'**une épaisseur de la crémaillère (16), et donc un jeu d'une denture du mécanisme à crémaillère (14), varie sur une longueur de la crémaillère (16).

6. Frein à friction selon la revendication 1, **caractérisé en ce que** la garniture de frein à friction (5) est guidée de manière déplaçable sur une piste en forme d'hélice, coaxiale par rapport au corps de frein (3).

7. Frein à friction selon la revendication 1, **caractérisé en ce que** la connexion articulée de la crémaillère (16) à la garniture de frein à friction (5) présente un oeillet (17) avec un côté intérieur convexe.

8. Frein à friction selon la revendication 1, **caractérisé en ce que** la connexion articulée de la crémaillère (16) à la garniture de frein à friction (5) présente un jeu transversalement à la crémaillère (16).

9. Frein à friction selon la revendication 1, **caractérisé en ce que** la crémaillère (16) est disposée dans la direction de déplacement de la garniture de frein à friction (5) et/ou à la hauteur d'un centre de gravité de la surface de friction de la garniture de frein à friction (5).
